# EUROPEAN PATENT APPLICATION

(11) **EP 2 101 452 A1**
(43) Date of publication of application: **16.09.2009**
(21) Application number: 08300142.0
(22) Date of filing: 13.03.2008
(51) Int. Cl.: H04L 12/56

(54) **Methods and systems for recovery of bidirectional connections**

(71) Applicant: Alcatel Lucent, 75008 Paris (FR)
(72) Inventor: Brehon, Yannick, 75014 Paris (FR); Ciavaglia, Laurent, 92120 Montrouge (FR)
(74) Representative: Thibaud, Jean-Baptiste

(57) **Abstract**

A communication network comprises a first switching node (A), a second switching node (C), a first, a second, and a third network paths connecting the first and second switching nodes, a bidirectional connection (LSP1) established along the first network path, a first unidirectional connection (LSP2) provisioned along the second network path, a second unidirectional connection (LSP3) provisioned along the third network path, wherein the first and second unidirectional connections have opposite flow directions,
wherein at least one of the first and second switching nodes comprises a first switch-over module for performing a switch-over action between a first flow direction of the bidirectional connection and the first unidirectional connection,
wherein at least one of the first and second switching nodes comprises a second switch-over module for performing a switch-over action between a second flow direction of the bidirectional connection and the second unidirectional connection. In embodiments, the connections are arranged as Label-Switched Paths between GMPLS nodes.

## Description

### Field of the invention

The invention relates to the technical field of connection oriented communication networks, especially networks implementing a Multi Protocol Label Switching (MPLS) or Generalized Multi Protocol Label Switching (GMPLS) protocol stack.

### Background of the invention

The Internet Engineering Task Force (IETF) has initially defined a GMPLS architecture in Request for Comments (RFC) 3945. The GMPLS architecture defined in RFC 3945 allows establishment of bi-directional symmetric label-switched paths (LSPs). A symmetric bi-directional LSP has the same traffic engineering requirements including fate sharing, protection and restoration, Label-Switching Routers (LSRs), and resource requirements (e.g., latency and jitter) in each direction. A bidirectional LSP is an association of two unidirectional data plane connections that could simultaneously deliver traffic in a particular layer between a pair of transport nodes in opposite directions. In the context of GMPLS, both unidirectional data plane constituents of a bidirectional LSP take identical paths in terms of data links, are provisioned concurrently, and require a single, shared control state. With bi-directional LSPs both the downstream and upstream data paths, i.e. from initiator to terminator and terminator to initiator, are established using a single set of signaling messages. This reduces the setup latency to essentially one initiator-terminator round trip time plus processing time, and limits the control overhead to the same number of messages as a unidirectional LSP. For bi-directional LSPs, two labels must be allocated. Bidirectional LSP setup is indicated by the presence of an Upstream Label in the appropriate signaling message.

The GMPLS architecture can be extended to support asymmetric bidirectional LSPs, as described in Internet draft "GMPLS RSVP-TE extension in support of bidirectional LSPs with asymmetric bandwidth requirements", A. Takacs et al., February 2007.

IETF RFC 4872 describes protocol-specific procedures and extensions for GMPLS Resource ReSerVation Protocol - Traffic Engineering (RSVP-TE) signaling to support end-to-end LSP recovery, which denotes protection or restoration. In accordance with RFC 4872, a bidirectional working LSP can only be protected or restored through a bidirectional recovery LSP.

### Summary of the invention

It is an object of the invention to provide flexible ways of recovering bidirectional connections in label-switching networks. It is another object of the invention to provide new methods and systems for recovering the traffic of a bidirectional connection in instances where the network does not have a capacity to transport a bidirectional recovery connection.

According to an embodiment of the invention, these objects are achieved by a switching node comprising
a data repository storing first connection data relating to a bidirectional connection established between said switching node and a remote switching node along a first path, and second connection data relating to a unidirectional connection provisioned between said switching node and said remote switching node along a second path, and
a switch-over module for performing a switch-over action between a first flow direction of the bidirectional connection and the unidirectional connection with the second path.

In embodiments, an initiator node of the bidirectional connection and/or a terminator node of the bidirectional connection is/are configured in this manner.

In a preferred embodiment, the switching node further comprises a communication module for receiving a recovery triggering signal and for triggering said switch-over module in response to said recovery triggering signal. A recovery triggering signal and the corresponding communication module can be implemented in diverse manners. Examples of recovery triggering signals are a notification of a fault affecting the bidirectional connection or a recovery triggering command sent by a recovery deciding entity disposed in the network. In embodiments, as an alternative or in combination with the above, the switching node can be arranged to enable the switch-over module to be triggered by other means, e.g. by an external command, which may or may not be related to recovery from a fault condition.

In an embodiment, the unidirectional connection is provisioned as a protection connection associated to the bidirectional connection. In this embodiment, the unidirectional connection is not only provisioned in the control plane, but also fully established in the data plane. Therefore a switch-over action may be performed immediately.

In another embodiment, the unidirectional connection is provisioned as a restoration connection associated to the bidirectional connection,
said switching node further comprising a communication module for receiving a recovery triggering signal and a signaling module for sending restoration signaling along the second path to fully establish the unidirectional connection in response to said recovery triggering signal.

In an embodiment, the data repository stores third connection data relating to a unidirectional connection provisioned between said switching node and said remote switching node along a third path, wherein the unidirectional connections along the second and third paths have mutually opposite flow directions, said switching node further comprising a second switch-over module for performing a switch-over action between a second flow direction of the bidirectional connection and the unidirectional connection with the third path.

The unidirectional connection with the third path can also be provisioned as a protection connection or a restoration connection associated to the bidirectional connection. In an embodiment, the unidirectional connection with the third path is provisioned as a restoration connection associated to the bidirectional connection, said switching node further comprising a communication module for receiving a recovery triggering signal and a signaling module for sending restoration signaling along the third path to fully establish the unidirectional connection in response to said recovery triggering signal.

The invention provides also a communication network comprising
a first switching node,
a second switching node,
a first, a second, and a third network paths connecting the first and second switching nodes,
I a bidirectional connection established between said first and second switching nodes along the first network path,
a first unidirectional connection provisioned between said first and second switching nodes along the second network path,
a second unidirectional connection provisioned between said first and second switching nodes along the third network path, wherein the first and second unidirectional connections have opposite flow directions,
wherein at least one of the first and second switching nodes comprises a first switch-over module for performing a switch-over action between a first flow direction of the bidirectional connection and the first unidirectional connection,
wherein at least one of the first and second switching nodes comprises a second switch-over module for performing a switch-over action between a second flow direction of the bidirectional connection and the second unidirectional connection.

The invention provides also a method for configuring a switching node in a communication network, comprising the steps of:
receiving a signaling message from a first label-switching node at a second label-switching node to establish a bidirectional connection between said first and second switching nodes along a first network path, wherein said signaling message comprises a field for requesting unidirectional recovery, and
configuring a bridge module in said second switching node for connecting a traffic to at least one of a flow direction of the bidirectional connection going from the second switching node to the first switching node and a unidirectional connection provisioned between said first and second switching nodes along a second network path, wherein a flow direction of said unidirectional connection goes from the second switching node to the first switching node.

In an embodiment, the method further comprises the step of transmitting a signaling message from the second label-switching node to the first label-switching node, in response to receiving said field for requesting unidirectional recovery, to provision said unidirectional connection with the second network path.

In an embodiment, the method further comprises the step of configuring a switch-over module in said second switching node for performing a switch-over action between the flow direction of the bidirectional connection going from the second switching node to the first switching node and said unidirectional connection with the second network path.

In an embodiment, the method further comprises the steps of:
receiving a signaling message from the first label-switching node at the second label-switching node to provision a unidirectional connection between said first and second switching nodes along a third network path, wherein a flow direction of said unidirectional connection goes from the first switching node to the second switching node, and
configuring a selector function in said second switching nodes for extracting a traffic from at least one of a flow direction of the bidirectional connection going from the first switching node to the second switching node and said unidirectional connection with the third network path.

In an embodiment, the method further comprises the step of configuring a switch-over module in said second switching node for performing a switch-over action between the flow direction of the bidirectional connection going from the first switching node to the second switching node and said unidirectional connection with the third network path.

The invention provides also a digital storage medium having a machine-executable program recorded thereon, and a programmable device comprising a machine-executable program recorded thereon.

In embodiments, the switching nodes are arranged as label-switching nodes e.g. GMPLS nodes, and the connections are arranged as LSPs.

Embodiments of the invention are based on the idea of enabling a bidirectional connection to be protected or restored through one or two unidirectional connections. In some embodiments, only one direction of the bidirectional connection is protected or restored through a unidirectional connection. In other embodiments, both directions of the bidirectional connection are protected or restored through unidirectional connections that follow different network paths. Since each unidirectional connection requires only bandwidth resources in one direction along the respective network path, the probability of finding an appropriate path with available resources in the network is better than for a bidirectional protecting connection, which would require available resources in both directions along a same path.

### Brief description of the drawings

These and other aspects of the invention will be apparent from and elucidated with reference to the embodiments described hereinafter, by way of example, with reference to the drawings.
Figure 1 is a diagrammatic view of a communication network in accordance with an embodiment of the invention.
Figure 2 is a functional view of an embodiment of a connection controller for a node.
Figure 3 illustrates an embodiment of forwarding information base.
Figure 4 is flow diagram showing an embodiment of a method for establishing connections in the network of Figure 1.
Figure 5 shows an embodiment of association information used in the method of Figure 4.

### Detailed description of the preferred embodiments

An embodiment of the invention is now described in a GMPLS network where connections are implemented as LSPs. GMPLS Terminology is used in accordance with IETF RFC 4427, unless different definitions are explicitly provided for herein below.

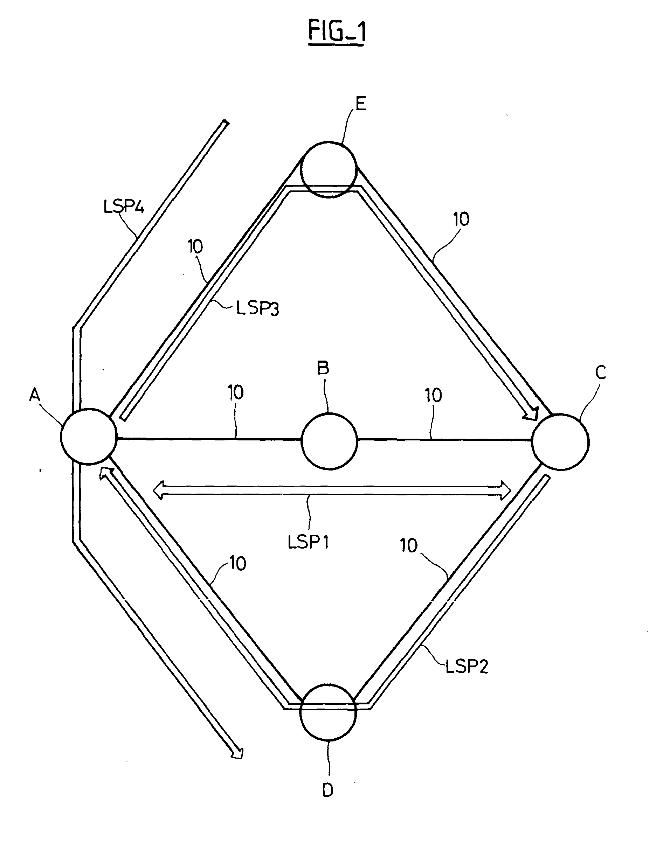

With reference to Figure 1, a GMPLS network comprises a plurality of nodes A, B, C, D, E connected by physical links 10. The number of nodes, number of links and topology shown are purely illustrative and not limitative. The data plane can be of any type that GMPLS currently supports or will support in the future, e.g. all-optical, WDM, SONET, SDH, Ethernet, IP and others.

In Figure 1, thick arrows show connections established or provisioned between the nodes. A bidirectional LSP referenced as LSP1 is established between nodes A and C along a route A-B-C. The LSP LSP1 is a working LSP that is fully established to transport a normal traffic in both directions between at least A and C. Being a bidirectional LSP, the LSP LSP1 has a single, shared control state for both flow directions.

In order to partly or fully recover the normal traffic in case of a failure or degradation affecting the LSP LSP1, at least one unidirectional recovery LSP is provisioned or established between nodes A and C along a different route. In Figure 1, two unidirectional recovery LSPs are shown, referenced as LSP2 and LSP3. The LSP LSP2 follows the route C-D-A and has a flow direction from C to A. The LSP LSP3 follows the route A-E-C and has a flow direction from A to C. Hence, each of the unidirectional LSPs LSP2 and LSP3 is intended to recover the traffic of one respective flow direction of the bidirectional LSP LSP1.

Different recovery types or recovery schemes can be implemented with LSPs LSP2 and LSP3, e.g. dedicated protection, dedicated recovery with or without extra traffic, shared recovery with or without extra traffic, and others. Depending on the recovery type being implemented, the initial provisioning of LSPs LSP2 and LSP3 is done differently. Namely, for protection schemes, LSPs LSP2 and LSP3 are already fully established in the data plane, whereas for restoration schemes, LSPs LSP2 and LSP3 are initially provisioned at least in the control plane and additional signaling takes place to fully establish the pre-provisioned LSP when it must start to carry traffic. Different types of restoration schemes can be implemented as well, which involve different levels of pre-provisioning, e.g. pre-computation of route, with or without pre-allocation of resources, with or without pre-selection of resources, with or without cross connection of resources, etc.

Depending on the type of recovery being implemented, the use of LSP LSP2 as a recovery LSP for a corresponding flow direction of the bidirectional LSP involves at least one switch-over module at the ingress of LSP LSP2 (node C) and/or at the egress (node A). In embodiments, a switch-over module is implemented as a switchable bridge function at the ingress, e.g. a broadcast bridge or selector bridge in node C. In embodiments, a switch-over module is implemented as a switchable selector function at the egress, e.g. a selective selector in node A. In embodiments, the LSP LSP2 is provided with both a switchable bridge function at the ingress, which is arranged to selectively send a normal traffic on the LSP LSP1 or on the LSP LSP2, and a switchable selector function at the egress, which is arranged to selectively receive the normal traffic on the LSP LSP1 or on the LSP LSP2. The above applies to the other unidirectional LSP LSP3 mutatis mutandis. In embodiments, a switch-over module operates by updating a forwarding information base of the corresponding node.

The operation of the network in Figure 1 will now be briefly described in an illustrative embodiment. Initially, a normal downstream traffic is carried from node A to node C through LSP LSP1 and a normal upstream traffic is carried from node C to node A through LSP LSP1. Extra traffic may or may not be carried by LSPs LSP2 and LSP3, depending on the type of recovery being implemented. When a fault detection system in the network detects a fault condition affecting the LSP LSP1, the fault is reported to end nodes A and C, e.g. via an RSVP-TE message NOTIFY or other, which then trigger the recovery of the traffic. The components for detecting a fault and making a recovery decision are well-known in the art and can be implemented in any suitable manner in the nodes and or in other devices connected to the network. In an embodiment, the recovery of the bidirectional traffic can also be triggered through a manual command sent from a network management system (not shown) to the end nodes.

To recover the downstream traffic, at least one of node A and node C performs a corresponding switch-over action, i.e. a bridge function in node A and/or a selector function in node C switch/switches from LSP1 to LSP3. To recover the upstream traffic, at least one of node A and node C performs a corresponding switch-over action, i.e. a bridge function in node C and/or a selector function in node A switch/switches from LSP1 to LSP2. When the recovery scheme is restoration rather than protection, activation signaling takes place along the LSPs LSP2 and LSP3 in order to fully establish the unidirectional LSPs prior to the switch-over.

The recovery of a bidirectional LSP by one or two unidirectional LSPs can be applied to many use cases. One such use case is when the load of the network does not leave any available path for a bidirectional recovery LSP, as will be illustrated below. For the sake of illustration, still referring to Figure 1, it is assumed that all links 10 have a bandwidth capacity of 12 units in each direction. Prior to establishing the bidirectional LSP LSP1, a unidirectional LSP LSP4 with a bandwidth requirement of 10 units was established from node E to node D. Then it is desired to establish a symmetric bidirectional LSP with a bandwidth requirement of 10 units between nodes A and C and a corresponding recovery LSP. It can be seen that the route A-B-C is available to establish the working LSP, though no alternative route remains available for a bidirectional recovery LSP. Yet, the load of the network makes it possible to establish unidirectional recovery LSPs LSP2 and LSP3. Hence, the recovery of the bidirectional LSP by one or more unidirectional LSPs is more flexible, since it is compatible with network states that prevent a bidirectional recovery LSP from being established.

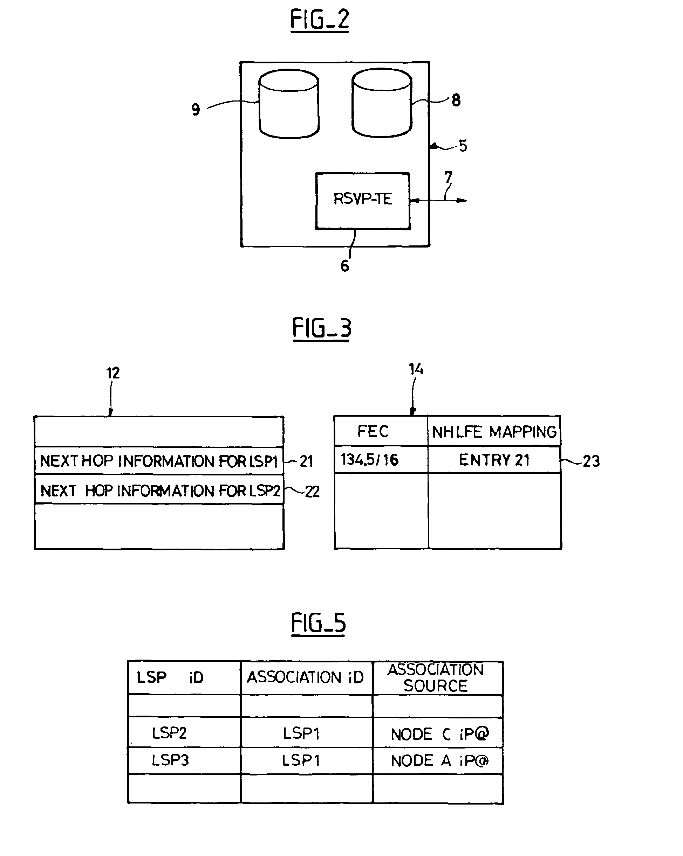

Implementations of MPLS label-switching routers or GMPLS nodes are well-known to those skilled in the art and will not be described in details here. In an embodiment, the respective node controller of nodes A and C includes a connection controller 5 shown on Figure 2. The connection controller 5 includes a signaling module 6, a forwarding information base 8 and a connection state base 9. The signaling module 6, e.g. an RSVP-TE module exchanges signaling messages with other nodes through control channels 7, processes signaling messages and updates the data in forwarding information base 8 and connection state base 9 accordingly. The forwarding information base 8 stores and maintains forwarding information relating to LSPs that the node is involved in. The connection state base 9 stores and maintains parameters and state variables relating to LSPs that the node is involved in, such as bandwidth, status, recovery type, recovery associations and others.

In an embodiment, the forwarding information base 8 is organized as a plurality of linked data structures, which includes a Next Hop Label Forwarding Entry (NHLFE) data structure, an Incoming Label Map (ILM) data structure and a FEC-to-NHLFE map (FTN) data structure. Figure 3 illustrates an implementation of such data structures with data corresponding to node C in Figure 1.

The NHLFE data structure 12 includes, for each LSP, an entry containing next-hop information (interface and next-hop address) and label manipulation instructions. It may also include other information required for processing packets in the associated stream. Figure 3 shows an entry 21 for LSP1 and an entry 22 for LSP2. In node C, the entry 21 corresponds to the upstream flow direction of the bidirectional LSP.

The FTN data structure 14 comprises a mapping from the FEC of any incoming packets to corresponding NHLFEs.

The bidirectional LSP LSP1 has been established to carry a predefined flow in each direction, i.e. a set of IP packets to be treated in the same manner. This flow can be identified by a given label or a given Forwarding Equivalence Class (FEC). In the example shown, the corresponding FEC is defined by a destination IP address mask 134.5/16. Hence an entry 23 initially maps that FEC to the entry 21 of the NHLFE data structure 12. In this example, a switch-over action can be performed by the connection controller by updating the mapping in entry 23 of the FTN data structure 14, so as to link entry 22 of the NHLFE data structure 12 instead of entry 21. Then incoming packets belonging to the FEC will start to be switched along LSP2 instead of LSP1.

For a flow identified by a given label, a corresponding entry exists in the ILM data structure, which includes a mapping from incoming labels to corresponding NHLFEs. In a similar manner, the connection controller can perform a switch-over action by updating the mapping in that ILM entry.

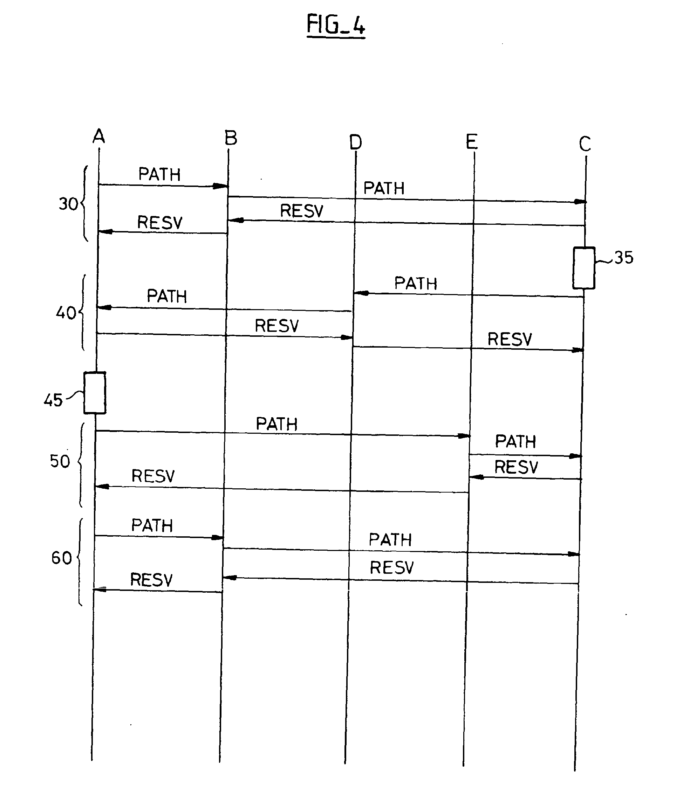

With reference to Figure 4, a method for signaling the LSPs LSP1, LSP2 and LSP3 in the network of figure 2 will now be described. The method will be described with the RSVP-TE protocol. Other signaling protocols may be used as well. Since the set up of LSPs using RSVP-TE is well-known in the art, it is not necessary to detail every object that is carried by the RSVP-TE messages in Figure 4. Traffic parameters are specified in the conventional manner to reserve and allocate resources in the nodes. In an embodiment, each node processes the RSVP-TE messages that it receives to populate and update a forwarding information base 8 and a connection state base 9 with corresponding connection data. As described above, different recovery types can be implemented, resulting in different ways of provisioning the recovery resources in the nodes.

In Figure 4, node A is the initiator node of the bidirectional LSP LSP1. Node A initiates RSVP-TE signaling to set up the bidirectional LSP LSP1 and the pair of unidirectional recovery LSPs LSP2 and LSP3. In the RSVP-TE protocol, the ingress node requests the set-up of an LSP. Therefore, node A can request the set up of LSPs LSP1 and LSP3. For the reverse direction, node A uses a protocol mechanism to inform node C that it must request a unidirectional recovery LSP LSP3 in the reverse direction.

In an embodiment, this mechanism in based on a specific flag or parameter that is put by node A into a connection request message, i.e. a PATH message that serves to set up the bidirectional LSP LSP1. For example, such a flag can be created in an LSP_ATTRIBUTES object, which is defined in IETF RFC 4420, and can be named "reverse unidirectional protection desired". Other objects and naming conventions may be used as well for the same purpose.

It is assumed that the route A-B-C has been determined for the bidirectional LSP LSP1. A routing module of node A or an external device, e.g. a Path Computation Element as specified in IETF RFC 4655, can perform the route determination. In the step 30, node A initiates RSVP-TE signaling to set up the bidirectional LSP LSP1. A message PATH is sent from node A to node C and a reservation message RESV is sent from node C to node A along the route in the conventional manner. However, in the message PATH, node A includes the specific flag or parameter, e.g. a flag "reverse unidirectional protection desired" to cause node C to request a unidirectional recovery LSP in the reverse direction. In step 30, both the downstream and upstream flow directions, i.e. from initiator to terminator and terminator to initiator, are established using a single set of signaling messages.

In response to detecting the specific flag in the message PATH, node C searches for a valid unidirectional LSP for the recovery in the reverse direction. Here, it is assumed that such an LSP does not already exist. Therefore node C proceeds to set up one. For that purpose, it is assumed that the route C-D-A has been determined for the unidirectional LSP LSP2. A routing module of node C or an external device can perform the route determination. In order to configure switch-over modules in the end nodes between the LSPs LSP1 and LSP2, node C generates and stores association information in step 35. Node C also communicates this association information to node A, preferably in a corresponding ASSOCIATION object conforming to IETF RFC 4872. In an embodiment, a new ASSOCIATION_TYPE value is used in order to specify that a bidirectional LSP is associated with a unidirectional LSP.

In the step 40, node C initiates RSVP-TE signaling to set up the unidirectional LSP LSP2. A message PATH is sent from node C to node A and a message RESV is sent from node A to node C along the route in the conventional manner. However, in the message PATH, node C includes the association information relating to LSPs LSP1 and LSP2. For example, this is an ASSOCIATION object, in which the association source is set to the control plane IP address of node C and the association ID is set to the LSP ID of the bidirectional LSP LSP1. The LSPs LSP1 and LSP2 can be established in different RSVP sessions or in a same RSVP session.

Being the ingress node, node A is also in charge of requesting the set up of the recovery LSP LSP3 in the forward (downstream) direction. In order to configure switch-over modules in the end nodes between the LSPs LSP1 and LSP3, node A generates and stores association information in step 45. Node A also communicates this association information to node C, preferably in a corresponding ASSOCIATION object conforming to IETF RFC 4872. It is assumed that the route A-E-C has been determined for the unidirectional LSP LSP3. In the step 50, node A initiates RSVP-TE signaling to set up the unidirectional LSP LSP3. A message PATH is sent from node A to node C and a message RESV is sent from node C to node A along the route in the conventional manner. However, in the message PATH, node A includes the association information relating to LSPs LSP1 and LSP3. For example, this is an ASSOCIATION object, in which the association source is set to the control plane IP address of node A and the association ID is set to the LSP ID of the bidirectional LSP LSP1. The LSPs LSP1 and LSP3 can be established in different RSVP sessions or in a same RSVP session.

In step 60, the set up of the bidirectional LSP LSP1 is updated by sending a message PATH that includes both association information, i.e. both ASSOCIATION objects, so that node B can also store the recovery related information. However, this step can be omitted to avoid involving node B in the recovery process.

The end nodes A and C use the association information to configure bridges, selectors and switch-over modules for switching traffic between the working LSP and the recovery LSPs when recovery is decided. Depending on the recovery type being implemented, switch-over modules are configured at one end or at both ends of the recovery LSPs. The association information is stored by the end nodes in the connection state base. Figure 5 illustrates an example format for the association information thus stored.

The messages shown on Figure 4 are not exhaustive. The order, in which the messages are sent, is purely illustrative. Some steps can be performed in a different order or simultaneously. The bandwidth requirements in the downstream (forward) direction and upstream (reverse) direction can be equal, i.e. symmetric, or unequal, i.e. asymmetric.

In some cases, it may happen that recovery is only desired in one direction or that the network load is such that resources are available for a recovery LSP only in one direction. Then the above embodiment can be modified to omit the set up of one of the unidirectional LSPs. Of course, this would result in the traffic of the bidirectional LSP being protected only in the flow direction for which a recovery LSP was set up.

Although the above description focuses on end-to-end recovery of the working bidirectional LSP, similar methods can be used for segment recovery. Therefore, the above embodiments can be modified by substituting the term "segment" for the term "LSP" to cope with a case, in which the bidirectional LSP continues to other nodes (not shown) beyond node A and/or node C.

The GMPLS architecture can be extended to support point-to-multipoint bidirectional LSPs, as described in French patent application No 0757329 filed on 03 September 2007. The method of protecting bidirectional connections by one or two unidirectional recovery connections can be applied to Point-to-multipoint (P2MP) LSPs as well. Therefore, where reference is made to an LSP in the above embodiments, this reference may be construed as a given branch of a P2MP LSP tree in a P2MP implementation.

The method of protecting bidirectional connections by one or two unidirectional recovery connections can be combined with the method of protecting bidirectional connections by bidirectional recovery connections, to provide a broader choice of recovery strategies adapted to diverse situations. In an embodiment, an automatic recovery strategy selection method is executed by a network node or external device to select a recovery strategy adapted to a current load of the network.

It is assumed that a bidirectional connection to be protected is defined. In an embodiment, the method comprises the step of searching for an available path for a bidirectional recovery connection. If a path is found, a bidirectional recovery connection is set up. If no such path can be found, a method of recovery by unidirectional connections is selected and one or two unidirectional recovery connections is/are set up.

In an embodiment, a method of recovery by unidirectional connections comprises the steps of searching for an available path for a unidirectional recovery connection in the forward direction, setting up a corresponding unidirectional connection if a path is found, searching for an available path for a unidirectional recovery connection in the reverse direction, and setting up a corresponding unidirectional connection if a path is found.

The invention may be implemented by means of hardware as well as software. The same item of hardware may represent several «modules». The functions of the various elements shown in the Figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A switching node (A, C), comprising
a data repository (9) storing first connection data relating to a bidirectional connection (LSP1) established between said switching node and a remote switching node (C, A) along a first path, and second connection data relating to a unidirectional connection (LSP2, LSP3) provisioned between said switching node and said remote switching node along a second path, and
a switch-over module (5) for performing a switch-over action between a first flow direction of the bidirectional connection and the unidirectional connection with the second path.

2. A switching node in accordance with claim 1, further comprising a communication module for receiving a recovery triggering signal and for triggering said switch-over module in response to said recovery triggering signal.

3. A switching node in accordance with claim 1 or 2, wherein the unidirectional connection is provisioned as a restoration connection associated to the bidirectional connection,
said switching node further comprising a communication module for receiving a recovery triggering signal and a signaling module (6) for sending restoration signaling along the second path to fully establish the unidirectional connection in response to said recovery triggering signal.

4. A switching node in accordance with any one of claims 1 to 3, wherein the data repository stores third connection data relating to a unidirectional connection (LSP3, LSP2) provisioned between said switching node and said remote switching node along a third path, wherein the unidirectional connections along the second and third paths have mutually opposite flow directions,
said switching node further comprising a second switch-over module for performing a switch-over action between a second flow direction of the bidirectional connection and the unidirectional connection with the third path.

5. A switching node in accordance with any one of claims 1 to 4, wherein said switching nodes is arranged as a label-switching node and the connections are Label-Switched Paths.

6. A method for configuring a switching node in a communication network, comprising the steps of:
receiving (30) a signaling message from a first label-switching node (A) at a second label-switching node (C) to establish a bidirectional connection (LSP1) between said first and second switching nodes along a first network path, wherein said signaling message comprises a field for requesting unidirectional recovery, and
configuring a bridge module in said second switching node for connecting a traffic to at least one of a flow direction of the bidirectional connection going from the second switching node to the first switching node and a unidirectional connection (LSP2) provisioned between said first and second switching nodes along a second network path, wherein a flow direction of said unidirectional connection goes from the second switching node to the first switching node.

7. A method in accordance with claim 6, further comprising the step of transmitting (40) a signaling message from the second label-switching node to the first label-switching node, in response to receiving said field for requesting unidirectional recovery, to provision said unidirectional connection with the second network path.

8. A method in accordance with claim 6 or 7, further comprising the step of configuring a switch-over module in said second switching node for performing a switch-over action between the flow direction of the bidirectional connection going from the second switching node to the first switching node and said unidirectional connection with the second network path.

9. A method in accordance with any one of claims 6 to 8, further comprising the steps of:
receiving (50) a signaling message from the first label-switching node at the second label-switching node to provision a unidirectional connection (LSP3) between said first and second switching nodes along a third network path, wherein a flow direction of said unidirectional connection goes from the first switching node to the second switching node, and
configuring a selector function in said second switching nodes for extracting a traffic from at least one of a flow direction of the bidirectional connection going from the first switching node to the second switching node and said unidirectional connection with the third network path.

10. A method in accordance with claim 9, further comprising the step of configuring a switch-over module in said second switching node for performing a switch-over action between the flow direction of the bidirectional connection going from the first switching node to the second switching node and said unidirectional connection with the third network path.

11. A digital storage medium having a machine-executable program recorded thereon, said program comprising instructions to perform a method in accordance with any one of claims 6 to 10.

12. A programmable device comprising a machine-executable program recorded thereon, said program comprising instructions which, when executed on the device, cause the device to carry out the steps of a method in accordance with any one of claims 6 to 10.

## Amended claims

### Amended claims in accordance with Rule 137(2) EPC.

**1.** A method for configuring a label-switching node in a communication network, comprising the steps of:
receiving (30) a signaling message comprising an Upstream Label object from a first label-switching node (A) at a second label-switching node (C) to establish a working bidirectional Label-Switched Path (LSP1) between said first and second label-switching nodes along a first network path, **characterized in that** said signaling message comprises a field for requesting unidirectional recovery, and the method further comprises:
configuring a bridge module in said second label-switching node for connecting a traffic to at least one of a flow direction of the bidirectional Label-Switched Path going from the second label-switching node to the first label-switching node and a unidirectional Label-Switched Path (LSP2)provisioned between said first and second label-switching nodes along a second network path, wherein a flow direction of said unidirectional Label-Switched Path goes from the second switching node to the first switching node.

**2.** A method in accordance with claim 1, further comprising the step of transmitting (40) a signaling message from the second label-switching node to the first label-switching node, in response to receiving said field for requesting unidirectional recovery, to provision said unidirectional Label-Switched Path with the second network path.

**3.** A method in accordance with claim 1 or 2, further comprising the step of configuring said bridge module as a switch-over module in said second label-switching node for performing a switch-over action between the flow direction of the bidirectional Label-Switched Path going from the second switching node to the first label-switching node and said unidirectional Label-Switched Path with the second network path.

**4.** A method in accordance with any one of claims 1 to 3, further comprising the steps of:
receiving (50) a signaling message from the first label-switching node at the second label-switching node to provision a unidirectional Label-Switched Path (LSP3) between said first and second label-switching nodes along a third network path, wherein a flow direction of said unidirectional Label-Switched Path goes from the first label-switching node to the second label-switching node, and
configuring a selector function in said second label-switching nodes for extracting a traffic from at least one of a flow direction of the bidirectional Label-Switched Path going from the first label-switching node to the second label-switching node and said unidirectional Label-Switched Path with the third network path.

**5.** A method in accordance with claim 4, further comprising the step of configuring said selector function as a switch-over module in said second label-switching node for performing a switch-over action between the flow direction of the bidirectional Label-Switched Path going from the first label-switching node to the second label-switching node and said unidirectional Label-Switched Path with the third network path.

**6.** A digital storage medium having a machine-executable program recorded thereon, said program comprising instructions to perform a method in accordance with any one of claims 1 to 5.

**7.** A programmable device comprising a machine-executable program recorded thereon, said program comprising instructions which, when executed on the device, cause the device to carry out the steps of a method in accordance with any one of claims 1 to 5.
